# EUROPEAN PATENT APPLICATION

(11) **EP 2 341 682 A1**
(43) Date of publication of application: **06.07.2011**
(21) Application number: 10197059.8
(22) Date of filing: 27.12.2010
(51) Int. Cl.: H04L 29/06, H04L 29/08

(54) **Method and arrangement for encrypted data transmission**

(30) Priority: 29.12.2009 FI 20096404
(71) Applicant: Kabuto Oy, 02760 Espoo (FI)
(72) Inventor: Mikkolainen, Markus, 02760, Espoo (FI)
(74) Representative: LEITZINGER OY

(57) **Abstract**

A method and system for the secure transfer of data between client machines by using public-key cryptography for hiding the data with a public key belonging to recipients of the communicated data, wherein a server included in the system is provided with means to install on the client machines a program means, which is functional in an internet browser and which is adapted, in collaboration with the server, to send and receive public key-encrypted data in such a way that the client machine's program means retrieves at least one recipient's public key for encryption to be used locally for hiding the data, and the program means transfers the hidden data to an internet server for further transmission to the recipient.

## Description

The invention relates to the transfer of data encrypted by means of a public key.

### Background of the invention

Public key cryptography is based on asymmetric encryption, wherein encryption is conducted by using a key other than the one used for decryption. Thus, one part of a key pair can be published, for example by distributing a public key, whereby the encrypted text can only be decrypted by one's own private key. Knowing the public key does not enable revising or reading the message. A known public key encryption algorithm is for example RSA, and systems, protocols or software programs using public encryption include for example PGP, GPG, SSL, TSL and SSH.

In practice, the file itself is generally encrypted with symmetric cryptography and the symmetric encryption key is encrypted with public-key cryptography by using asymmetric encryption. Thereby, a large file can be encrypted and stored by using a long single-use random key, and it is only the employed key which is encrypted with a mathematically heavier asymmetric encryption. Another benefit is that the possibility of encryption a large file encryption key with several different public keys and supplying copies of the encrypted keys, whereby the recipients are able to use their own encrypted key for decrypting first the symmetric key and then the file itself. Hence, the information of a large file (or, for example, an entire disk drive) can be distributed in encrypted form to several different recipients by being encrypted with their own public key, without having to encrypt the actual information once again.

A public key can also be used for setting up a web of trust or a public key infrastructure (PKI). Both make use of the fact that a public key can be used for the authentication of a sender as long as the sender alone knows the encrypted key and there is certain knowledge that the public key has not been falsified or replaced. The web of trust principles were described by Phil Zimmermann in the context of a PGP program in 1992.

A practical problem with public key systems continues to be usability, i.e. separate programs are needed for the encryption and management of keys, the installation of programs is inconvenient and calls for expertise. Especially for a temporary exchange of files, the public key systems are too awkward to use. The public key encryption is generally used for secure communication only across an SSH or ipsec link, whereby the opening of a communication line involves a replacement of single-use public keys. A drawback with SSH communication is the requirement of a direct link between sender and receiver in the event that a proxy server is not to be trusted.

An objective of the invention is to create an easy-to-use data transfer mode, which nevertheless does not require the trustworthiness of a data storing and communicating party. It is a further objective that putting the system into service is not more difficult than a normal www-based data transfer system or storage and transfer system of files, but the user can still be sure about the continued secrecy of a transferred message, even if he or she had reservations about trusting the maintenance of a data communicating server or the information security of the server. Still another objective, despite the easy-to-use quality, is to create abilities to fend off "man-in-the-middle" type attacks or at least to detect such attacks.

### Description of the invention

Users of the data transfer system store files on a server, said files being in a form encrypted with a recipient's public key. The software run by the users on their machines can also be used for signing public keys of others as an indication of trust. In this respect, the system operates like a web of trust presented in PGP, wherein the transfer of data is conducted by using a not-to-be-trusted party. The server may be for example a mail or file server. In this regard, the invention provides an implementation which is equivalent to what is used in the PGP system.

Many web browsers provide an option for the recognition and use of signed applets. The use of signatures is quite easy even for an ordinary user as long as, along with the browser, there are supplied necessary valid public keys of a reliable party for confirming the signature. If this is absent, it can be installed separately. A known problem in this context is, for example, that the outdated identifiers of parties turned non-trustworthy remain in use for a long time and, on the other hand, identifiers wound up in wrong hands as a result of data system break-ins.

The invention provides a system which first installs on a computer the user of a preferably PKI signed applet or Java Webstart program. This is the only phase, in which the user of a system according to the invention must have a strong trust relationship with the signatory or program supplier. The applet needs to be signed in order to verify the program supplier, such that for example a falsified name service cannot be used for loading on the user's computer not the correct applet, but instead a malware or program with added espionage features. Running an applet or installing a Webstart program is quite a simple procedure for the user of most common internet browsers. The communication between server and client is preferably https-, SSH or SSL-protected and signed.

It should be noted that, at any time in a method of the invention, any sensitive information is neither released to a client machine nor transferred between server machine and client without protecting it as early as in the client machine with an encryption, the decryption of which can only be done by a recipient of the information. The loading of an applet is preferably conducted through an encrypted tunnel for securing its integrity, the applet itself, i.e. a program carrier of the invention, need not be kept in secrecy for a secure transfer of the information. A reliably signed applet can be loaded safely even through a non-encrypted communication link.

However, the signed encrypted https-, SSH- or SSL-link makes it easier to avoid using a falsified server, because most internet browsers warn by default value about deficiencies in a signature. Still, even in this case, the user is expected to consider whether a signature is reliable and provided by a reliable party instead of being for example stolen, or signed on proper grounds but in possession of a dubious party.

The proxy server, included in the system, preferably loads a Java webstart program or an applet on a client machine, such that the applet installs itself automatically on the client machine and activates automatically at a server request. Java Webstart is beneficial by operating in a client machine in its own "sandbox", which is isolated from the rest of a client machine's system. Also, the Webstart program is loaded just once and it activates automatically at a server request. Hence, the Webstart technique makes it possible that into a browser is integrated a program, which enables concealing the management of keys and the whole inconvenience of using public key cryptography from a user in a www-browser's user interface in such a way that, from the standpoint of a user, the system is not substantially different from ordinary www e-mail or a discussion or data distribution server which supports the transfer of data. The Webstart program can also be replaced by using a server's toolbar program or a program code reloadable in each time of use. The toolbar program offers an advantage of the program being loadable from any source in advance. The encryption applet can be established in a reloadable form, for example being runnable in a browser by means of Java script or ajax technique.

The applet of a client machine generates a private key for the user, and a public key pair for it. This generation can be conducted at a server request, but the password is only stored in the applet's own database on the client machine, generally encrypted with a password given to the applet by the client him- or herself. Here, the server and the applet work in collaboration during the course of key generation, such that the public key is given to the server for safekeeping. The server needs information about key versions and their service duration or maximum number application times. The server is preferably also able to compel or prompt a client to replace the key for example at fixed intervals or when there is reason to suspect that a client machine has ended up in the wrong hands.

Thereafter, the applet in question and the data transfer server work in collaboration in the communication of files, such that the applet generates for each file a single-use encryption key for symmetric encryption, conceals a file to be transmitted by means of this key. This is followed by notifying the server about recipients of the file, and the server hands over the recipients' public keys to the applet. The applet uses the recipients' public keys to conceal the single-use symmetrical encryption key and sends the thereby concealed keys to the server. In practice, the encryption keys may constitute a part of the protected file or the recipients' keys may be in separate files. This enables increasing the number of those capable of receiving files already loaded on the server by increasing the number of file decryption keys created with the keys of new recipients.

Preferably, it is possible to sign the recipients' keys with other users' passwords, whereby, what will also be delivered along with the key to the recipients' public keys are the signatures of trustworthy parties or any other user. Hence, the applet present on a user's machine is able to compare the signatures by means of its own password database. This signing and comparison of passwords is conducted on client machines, and the server itself is not able to sign keys, at least not with anything other than with encryption keys for server maintenance or with those in possession of a server administrator. In addition to signatures, it is of course possible for example to telephone a familiar recipient and to compare the password and its abstract over the phone. Then, if so desired, the user may report to the applet that the password is trustworthy.

In this case, the signing means that the public keys preserved by a server can be accompanied by certificates about the authenticity of this particular key, said certificates having been signed with other users' secret key. This principle is known as such from a web of trust discussed in connection with PGP software. A system of the invention enables the preservation of signatures and the use thereof more easily than what is generally possible in the context of a PGP program. In the event that the user for example uses his/her own key to sign his/her friends' public keys into the system, he/she has keys that he/she signed for him-/herself at his/her disposal upon establishing communication from any computer, provided that he/she has a copy of his/her own key pair with him/her.

The signing key is usually not the same as the key pair used for message encryption. The validity period of a signing key is generally longer than that of encryption keys, and it is used for signing one's own new public keys. A separate signing key enables a secure use of keys intended for short term service, because the authenticity of short term keys can be verified without carrying along a secret signing key. Thus, a short term secret key is signed in advance and, hence, no secret signing keys are either used for example on an unsecure machine which may contain espionage programs. Consequently, even in a worst case scenario, the espionage program is only able to capture a short term secret key.

The secret key can also be stored on a server by having it encrypted with a symmetric encryption key known to the client. If the symmetric encryption key is selected with sufficient care, this method makes it possible for the client to move about and use the system also on trips from an arbitrary computer. In this case, the only remaining security risk is created by espionage programs, which have been previously installed on the presently used computer and which may spy for example on the keyboard and display operation. Even then, the use of a new or positively clean computer is safe as long as secret information is not stored in non-encrypted form for example in temporary files by the user or by the presently used programs. Hence, in this case, the user establishes a communication with the system's server for example from a machine in public library, whereby an applet becomes installed in the browser for using the system. This is followed by the user loading his/her own key pairs and decodes the symmetric encryption thereof with his/her personal keys. After this, the user's own secret key is at his/her disposal. If the user only intends to send a file, he/she need not load his/her own key pair unless the files need to be signed. Thus, in practice, the transmission is anonymous from the standpoint of a recipient. If it is just one's own public key which is loaded, it will be possible to personally check the signed public keys and thereby verify the authenticity of a recipient. One's own keys can be identified in this case by first deciphering the same with one's own symmetric encryption password.

One can also use for example a Linux distribution activated from a CD or USB disk, or some other compact and secure operating system with its tools in a safe fashion, such that, over the working period of storing the information, one makes use of a separate removable mass storage. Hence, the system can be used on any machine that can be activated from a DC disk or for example from a USB memory drive. In this case, the applet itself can naturally be present on a Linux disk in previously loaded form, and so can the encrypted password databases.

The automatically data transferring server included in a system of the invention can be replaced with any database or data transfer system. Hence, the machine can be loaded with an applet from a single server, and files to be transferred can be loaded by the applet in any already existing service or e-mail system. In this case, the files will be transferred for example in the form of e-mail attachments. The keys needed by recipients in this event can be linked to the attachment file itself or can be sent in the form of separate attachment files. It is also possible to send a mere notice for example by e-mail or an SMS message, and the keys themselves or the file can be transferred by way of a WWW chat site, a file service, or for example by way of an FTP service, by sending a link to the recipient for the retrieval of keys. In this case, however, it is preferable, in view of replacing the recipients' keys, to provide a server for an easy retrieval and storage of the keys.

Systems of the invention will now be described by way of examples as follows.

### Example 1:

The sender's and receiver's machines establish an internet communication with a server, from which is loaded an applet of the invention on the internet browser. The applet requests users to prepare a key pair for themselves or does it automatically, a public key being sent to the same server. The secret key is stored in the applet's "sandbox" after being encrypted with the user's password. If this particular password is to be used in a mobile fashion from various client machines, it can be sent to the server after being encrypted with a symmetric password. Being able to use his/her own public password to encrypt any documents for him-/herself, the user is thereby able to use the server-stored information anywhere as long as he/she can load the applet on a secure machine.

It is preferably possible to store signatures for keys on the server for thereby building a web of trust. For example, the sender may sign a recipient's key after making sure that the message has certainly reached the intended and familiar person. The result is a system, which operates like a web mail and which is highly user-friendly. Preferably, the recipient's key can be signed for example after the successful reception of a test message as long as it has been verified that the message reached its destination. Hence, the result from a user's standpoint is a system equally simple to a normal web mail, but communication is nevertheless very secure as long as the work station itself cannot be breached for example by means of a remote access software. Messages need not be preserved or transferred in non-encrypted form, and received messages can of course be stored in encrypted form only.

### Example 2:

The actual message or file is sent over a route other than the server used for storing the passwords and loading the applet. Hence, the applet of a user's machine for example activates an e-mail program for the transmission of a message, or the applet encrypts for example the www mail attachments or the actual messages of a third party. Hence, the message can be communicated in the form of a normal e-mail, but its transmission and reception necessitates the use of a browser's applet, for example the use of a mailto: - link upon sending and receiving in order to decode an encrypted message for reading it by means of the applet. Consequently, the messages can be archived as e-mails in encrypted form.

### Example 3:

On the user's internet browser is loaded a toolbar application, which maintains a local key database or retrieves key information from a server and compares the signatures thereof. The key files to be loaded from outside are preferably signed by the user him-/herself, thus making the inadvertent amendment or replacement thereof impossible. In the event of being also preserved on the server, the user's secret key is encrypted with a symmetric password. A toolbar program is functional with several services, for example messages to be sent into a social network can be readily encrypted or signed this way. Thus, it is possible, for example, to exchange information among a group by using almost any discussion or information exchange application of the internet. At its simplest, the toolbar program is able to encrypt files or text fields of various forms to be posted on the internet, and the received encrypted fields and files are attempted to be identified and displayed in non-encrypted form.

### Example 4:

The system may contain a single-use transmission option, whereby the recipient sends a request for example in the form of a link dispatched by e-mail. The link is used for loading an applet and the recipient's public key on the sender's machine. In this case, the sender need not create his/her own secret key at all. Single use links and passwords provide for example an easy way of delivering material for publishing, or for example a way of filing patent applications or inventor's declarations. Hence, an invitation can be received for example by filling a web form and by handing over an e-mail address. Thus, the recipient of information has a reasonable control capability of restricting, if necessary, the number of senders and dispatch times, for example, if the messages are communicated by way of a server, it is possible to allow just a single use of each invitation.

Because a toolbar or applet program is easy to put into service, and if the toolbar itself takes care of encryption locally, the result is an easy-to-use securely protected mode of communication. The applet preferably uses a symmetrically password-encrypted secret key, whereby one and the same computer and internet browser can have a plurality of users without ability to open each other's messages. Preferably, the user can maintain several key pairs, whereby for example a signing key need not be loaded at all on an external machine. Then, in preparation of a trip, one can sign a short term key pair, which is no longer used after the trip. Hence, if necessary, a plurality of key pairs can be created in advance and those can be replaced safely, because their signature can be secured before the trip with a secure signing key.

Thus, in the process of encryption, the toolbar program retrieves a recipient's valid public key separately each time and checks that it has been signed by the recipient with his/her own signing key. Because public signing keys can also be preserved on a non-secured server, even their authenticity or the security of the internet connection cannot be considered absolutely certain either. The communication established from an external machine can be secured by loading one's own public or secret key encrypted with a symmetric password. If a key has been replaced without knowing the symmetric password, the key does not work. By means of one's own public key, a person is thereby able to verify recipients' keys signed by him-/herself, whereby falsification of the keys is impossible without knowing the password. This disables a typical man-in-the-middle attack with falsified key pairs and still allows a reasonably safe communication and replacement of passwords. Since the number of key pairs that can be created in advance is several and those can be signed in advance with a computer known to be safe, it is even possible to use single-use key pairs for receiving messages. Hence, in practice, the secret applet activated in an internet café retrieves the user's own symmetrically password-protected public key, which first enables verifying the integrity of one's own public key and then one's own keys can be used for verifying the integrity of self-signed other keys.

For reading his/her own messages, a person can use single-use keys to be retrieved from a server and encrypted with a symmetric password. Hence, in preparation of a trip, one may also generate a list of symmetric passwords in advance. When using single-use encryption keys, the sender is required to retrieve a recipient's new public key from the server for every transmission. If an encryption key is used several times, a version of the same secret key, encrypted with several single-use passwords, will be stored in a server. If necessary, it is also possible to use a modified list of passwords for creating a steganographic, deniable encrypted message, such that an enlisted password as such, in unmodified form, decodes only part of a file with the aid of an applet, thus enabling the use of harmless messages for misleading for example under the threat of torture, the actual secret message not being decrypted until a modified key is used. In this case, the modified key can be any easily memorized variant of an enlisted password, whereby the user is able to readily recall how to work out a real password from an enlisted one. Thus, after packing, the file itself is encrypted with two different passwords, and only that plain language portion of the file, which is capable of being decoded with each password, is displayed by the applet after decryption. The single-use, above-described steganographic password catalogue and single-use keys enable providing a highly secure mode of communication, which functions well even when traveling. Thus, the encryption keys are never carried along in functional form and, on the basis of the list of passwords, the attacker is only able to decipher a part of the message without knowing how to modify the password.

## Claims

1. A system for the secure transfer of data between client machines by using public-key cryptography for encrypting the data with a public key belonging to recipients of the communicated data, and in which system the storage and communication of encrypted data is performed by using at least one server between the client machines,
**characterized in that** a server included in the system is provided with means to install on the client machines a program means, which is functional in an internet browser and which is adapted, in collaboration with the server, to send and receive public key-encrypted data in such a way that the client machine's program means retrieves at least one recipient's public key for encryption to be used locally for hiding the data, and the program means transfers the hidden data to an internet server for further transmission to the recipient.

2. A system as set forth in claim 1, wherein the program means to be installed on a client machine is an applet, which only needs to be loaded once on a client machine, but which is activated by a server machine automatically at will, for example a Java Webstart applet, Flash applet.

3. A system as set forth in claim 1, wherein the server, which is used for storing public keys delivered by client machines, further comprises means to store and communicate the signatures of public keys stored thereby, such that the program means included a client machine of the system is able to retrieve the signature of a public key sent by a specific sender or the signatures of several public keys, which signatures have been created by other users of the system with their own signing keys.

4. A system as set forth in claim 1, wherein the public key-encrypted data comprises a symmetric single-use key, by means of which has been encrypted the actual data to be transferred.

5. A system as set forth in the preceding claim 4, wherein the server delivers a key, which has been encrypted with a recipient's public key, and a link to the actual encrypted data, whereby the client programs transfer the actual data by using a data transfer mode other than the system's server.

6. A system as set forth in claim 1, wherein the program meansmeans installed on a client machine can be re-activated also by a user of the client machine, whereby it enables using recipients' encryption keys, which have already been loaded earlier on the program means's database, for the encryption of files prior to sending the same to a recipient by using a data transfer channel external of the system, whereby it is not absolutely necessary to use the server of the system itself for the transfer of data or the retrieval of keys.

7. A system as set forth in claim 6, wherein the client machine's program means is a toolbar applet capable of being installed in browser software.

8. An application functional in association with an internet browser, **characterized in that** the applet includes means to retrieve from a server and to store public keys of other users, means to encrypt files and to send the encrypted files to a server.

9. A server for establishing a secure data transfer for client machines, **characterized in that** the server includes means to maintain a database of users' public encryption keys, and means to deliver the encryption keys to an applet in the client machine's internet browser.

10. A server as set forth in claim 9, **characterized in that** the server further includes means to store and deliver public key signatures for authenticating at least the users' public keys.

11. A method for the transfer of files by using public key encryption between sender and receiver, **characterized in that** the method comprises
- loading, from a server, program means, which are functional in an internet browser of the sender's and receiver's computer and which execute the following steps:
- the receiver's program means creates a key pair comprising a public key and a secret key
- the receiver's program means stores the public key in a server
- the sender's program means retrieves the receiver's public key from the server and presents its signature or abstract data to the sender for the verification of authenticity
- the sender's program means encrypts the outgoing data with the receiver's public key and sends the encrypted data to a server included in the internet
- the sender's program means, or the server that has received the encrypted data, notifies the receiver of a transmitted file
- the receiver retrieves the data with his/her internet browser, and the program means present in the receiver's browser decodes the encryption by means of a secret key.
